# EUROPEAN PATENT APPLICATION

(11) **EP 4 725 890 A1**
(43) Date of publication of application: **15.04.2026**
(21) Application number: 24818713.0
(22) Date of filing: 06.06.2024
(51) Int. Cl.: B66F 7/06, B66F 7/28, B25J 11/00, B25J 19/00

(54) **BATTERY SWAPPING ROBOT AND RAISING/LOWERING DEVICE THEREFOR**

(30) Priority: 07.06.2023 CN 202321435961 U; 07.06.2023 CN 202321437659 U; 07.06.2023 CN 202321435028 U
(71) Applicant: Sichuan Zhili Intelligent Energy Technology Co., Ltd., Yibin, Sichuan 644005 (CN)
(72) Inventor: LI, Liguo, Yibin, Sichuan 644005 (CN); SUN, Songwei, Yibin, Sichuan 644005 (CN); ZHANG, Yuliang, Yibin, Sichuan 644005 (CN)
(74) Representative: JD&P Patent Attorneys Joanna Dargiewicz & Partners
(86) International application number: PCT/CN2024/097647
(87) International publication number: WO 2024/251181

(57) **Abstract**

The present disclosure provides a battery swapping robot and a lifting device thereof. The lifting device includes a base (1). The base (1) is provided with at least two vertical posts (3), each post (3) is vertically provided with a guide rail (13), the guide rail (13) is movably provided with a lifting support arm (5), and the lifting support arm (5) is connected to a lifting driving mechanism (4). The upper limit of the lifting height of the lifting device is increased in such a way that the post and the lifting support arm slide against each other, which breaks the limitation that a battery cannot be lifted beyond a crossbeam in the prior art, and the power swapping mode is safer, and more reliable and efficient. The structural space of the power swapping robot adopting the lifting device is more compact and effective.

## Description

### TECHNICAL FIELD

The present disclosure belongs to the technical field of battery swapping, and in particular, to a battery swapping robot and a lifting device thereof.

### BACKGROUND

As is well known, common lifting devices generally have limitations such as limited lifting height, limited load capacity, etc., when lifting objects. Moreover, as the weight of the lifted objects increases, typical post-type lifting devices may have the hidden danger of overturning, which leads to the inability to provide stable support. For example, in the field of battery swapping of heavy-duty trucks, it is usually necessary to use a lifting device to lift and transport a battery in order to achieve battery swapping. However, each existing lifting device has a problem that the lifting height cannot exceed a crossbeam. In order to be compatible with battery-swapping heavy-duty trucks and swappable batteries of various heights in the market, the posts of the lifting device must be made relatively tall, which obviously wastes space when the lifting device is not in use. Each of the related patents, such as the two patents with publication numbers CN218703171U and CN216180672U, discloses that in the prior art, the upper frame or the crossbeam is supported by means of posts, that is, the height of the upper frame or the crossbeam is fixed, and the stroke range of the lifted swappable battery is limited, which affects the battery swapping efficiency.

### SUMMARY

### Technical Problem

In the prior art, the lifting stroke of the battery swapping robot is limited, which affects the battery swapping efficiency.

### Technical Solution

In view of the above problem, the present disclosure aims to provide a battery swapping robot and a lifting device thereof, adopting the technical schemes as follows:

A lifting device, including a base, where the base is provided with at least two vertical posts, a guide rail is vertically arranged on each post, and a lifting support arm is movably arranged on the guide rail and is connected to a lifting driving mechanism.

Preferably, the lifting driving mechanism includes a connecting part movably arranged on the guide rail, where a guide wheel engaged with the guide rail is rotatably arranged on the connecting part, the connecting part is threadedly engaged with a vertical lead screw, and the lead screw is connected with a driving part for driving the lead screw to rotate.

Preferably, a lead screw nut threadedly engaged with the lead screw is vertically arranged on the connecting part.

Preferably, a reinforcing crossbeam is connected between two lifting support arms.

Preferably, the post is provided with a first reinforcing arm fixedly connected to the base.

Preferably, the base is provided with a travelling device.

A battery swapping robot, adopting the lifting device for lifting, including a mounting frame fixedly mounted on the lifting support arm, where a telescopic device is connected below the mounting frame, and a battery gripper for clamping a battery is mounted on the telescopic device.

Preferably, the telescopic device is rotatably connected to the mounting frame, and a driving device for driving the telescopic device to swing is mounted on the mounting frame.

Preferably, an arc-shaped slide rail is mounted on the mounting frame, and the telescopic device is provided with a roller engaged with the arc-shaped slide rail.

Preferably, an inclined support member is mounted on the mounting frame and connected to the lifting support arm.

### Advantages Effects

To sum up, due to the adoption of the above technical schemes, the present disclosure has the following beneficial effects: The upper limit of the lifting height of the lifting device is increased in such a way that the post and the lifting support arm slide against each other, which breaks the limitation that a battery cannot be lifted beyond a crossbeam in the prior art, and the power swapping mode is safer, and more reliable and efficient. The structural space of the power swapping robot adopting the lifting device is more compact and effective.

### BRIEF DESCRIPTION OF THE DRAWINGS

In order to more clearly explain the technical schemes in the embodiments of the present disclosure, the accompanying drawings to be used in the embodiments will be briefly introduced below. It should be understood that the accompanying drawings below only illustrate some embodiments of the present disclosure and should not be construed as limiting the scope. Those of ordinary skill in the art may also obtain other related accompanying drawings according to these accompanying drawings without paying creative efforts.
FIG. 1 is a schematic perspective view of a lifting device provided by an embodiment of the present disclosure.
FIG. 2 is an enlarged schematic structural diagram of A in FIG. 1.
FIG. 3 is an enlarged schematic structural diagram of B in FIG. 1.
FIG. 4 is a schematic perspective view of a lifting device provided by an embodiment of the present disclosure from a second perspective.
FIG. 5 is a schematic structural diagram of FIG. 4 with a shielding cover.
FIG. 6 is a schematic perspective view of a lifting device provided by an embodiment of the present disclosure from a third perspective.
FIG. 7 is a schematic perspective view of another embodiment of a lifting device of the present disclosure.
FIG. 8 is a side-view schematic structural diagram of a post and a lifting support arm in FIG. 7.
FIG. 9 is a schematic structural diagram of another embodiment of a travelling device of the present disclosure.

Reference numerals: 1-base; 2-travelling device; 201- rail; 202- second motor; 203-third direction-changing gearbox; 204-second transmission shaft; 3-post; 4-lifting driving mechanism; 401-connecting part; 402-lead screw nut; 403-lead screw; 404-first transmission shaft; 405-second direction-changing gearbox; 406-first direction-changing gearbox; 407-first motor; 408-guide wheel; 409-reinforcing crossbeam; 410-protective shield; 5-lifting support arm; 6-mounting frame; 7-telescopic device; 8-battery gripper; 9- battery; 10-inclined support member; 11-driving device; 12-arc-shaped slide rail; 13-guide rail; 14-shielding cover; 15-gap; 16-second reinforcing arm; 17-first reinforcing arm; 18-third reinforcing arm; 19-universal wheel; 100-battery compartment; 200-carriageway.

### DETAILED DESCRIPTION OF THE EMBODIMENTS

In order to make the objectives, technical schemes, and advantages of the embodiments of the present disclosure clearer, the technical schemes in the embodiments of the present disclosure will be clearly and completely described below with reference to the accompanying drawings in the embodiments of the present disclosure. Apparently, the described embodiments are only some but not all of the embodiments of the present disclosure. The components in the embodiments of the present disclosure described and illustrated in the accompanying drawings here generally can be arranged and designed in various different configurations.

Therefore, the following detailed description of the embodiments of the present disclosure provided in the accompanying drawings is not intended to limit the claimed scope of the present disclosure, but merely represents selected embodiments of the present disclosure. All other embodiments obtained by those of ordinary skill in the art without paying any creative efforts on the basis of the embodiments in the present disclosure shall fall within the protection scope of the present disclosure.

In the description of the present disclosure, it should be noted that the orientation or position relationship indicated by terms such as "center," "up," "down," "left," "right," "vertical," "horizontal," "inner," and "outer" is based on the orientation or position relationship shown in the accompanying drawings, or the orientation or position relationship that the product of the present disclosure is usually placed when used. These terms are merely for the convenience of describing the present disclosure and simplifying the description, and are not intended to indicate or imply that the device or element referred to must have a specific orientation, or be constructed and operated in a specific orientation. Therefore, these terms should not be construed as limiting the present disclosure.

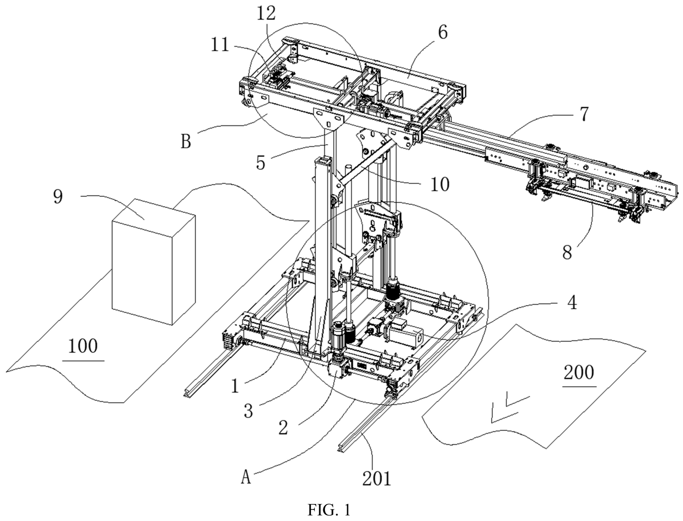

The present disclosure will be described in detail in conjunction with FIGS. 1 to 9.

### Best Mode of the Present Disclosure

A lifting device includes a base 1. The base 1 is provided with at least two vertical posts 3, a guide rail 13 is vertically arranged on each post 3, and a lifting support arm 5 is movably arranged on the guide rail 13 and is connected to a lifting driving mechanism 4. A battery swapping robot adopting the above-mentioned lifting device includes a mounting frame 6 fixedly mounted on the lifting support arm 5. A telescopic device 7 is connected below the mounting frame 6, and a battery gripper 8 for clamping a battery 9 is mounted on the telescopic device 7. The battery swapping robot is arranged between a battery compartment 100 and a carriageway 200, and the telescopic device 7 has a bidirectional telescopic function. That is, the battery gripper 8 may be moved above the battery compartment 100 and the carriageway 200, to facilitate picking up the battery 9 from one side of the battery compartment 100 and swapping the battery onto a vehicle parked in the carriageway 200.

As shown in FIG. 1, the lifting driving mechanism 4 drives the lifting support arm 5 to move vertically on the guide rail 13, so as to perform a lifting adjustment. Because there is no crossbeam limitation on the post 3, the lifting stroke of the lifting support arm 5 may be greatly increased, and the lifting stroke of the battery gripper 8 is increased accordingly. After picking up the battery 9 from one side of the battery compartment 100, the battery gripper 8 extends into the carriageway 200 through the telescopic device 7, so as to swap the battery 9. The battery 9 is made to pass between the two lifting support arms 5 in order to avoid the risk of rollover of the battery swapping robot when picking up the battery 9, and a gap 15 between the two lifting support arms 5 is required to be greater than the maximum width of the battery 9 in order to ensure that the battery 9 passes through the gap 15 between the lifting support arms 5 smoothly.

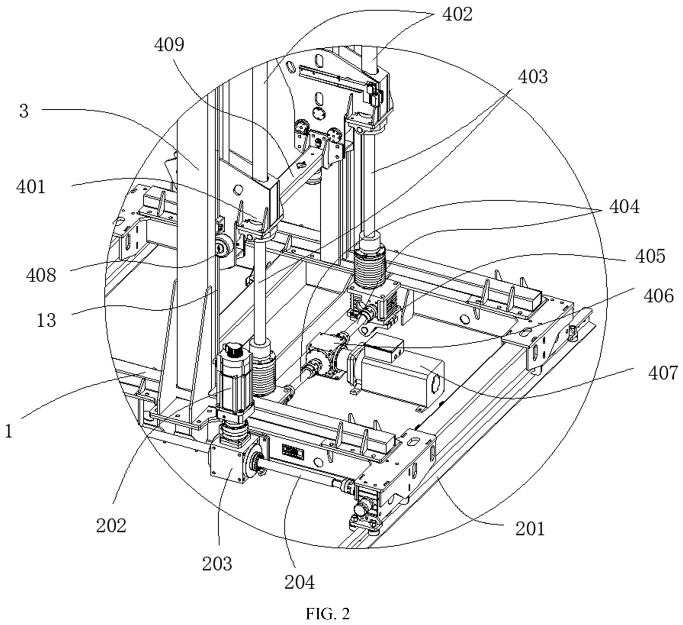

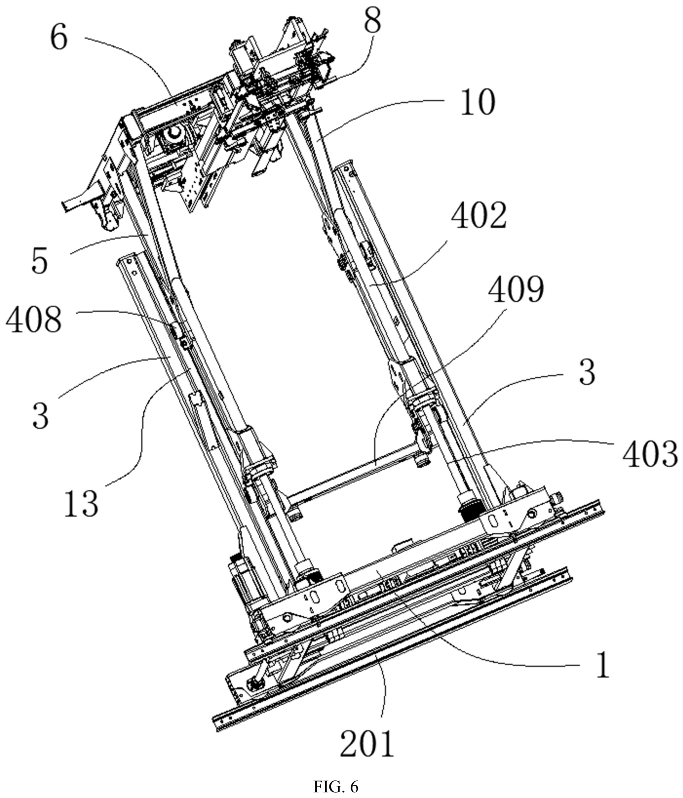

As shown in FIGS. 2 and 6, the lifting driving mechanism 4 includes a connecting part 401 movably arranged on the guide rail 13. A guide wheel 408 engaged with the guide rail 13 is rotatably arranged on the connecting part 401, the connecting part 401 is threadedly engaged with a vertical lead screw 403, and the lead screw 403 is connected with a driving part for driving the lead screw 403 to rotate. The guide wheel 408 may reduce the wear between the connecting part 401 and the guide rail 13, improving the service life of the lifting device. After the driving part drives the lead screw 403 to rotate, the lead screw 403 drives the connecting part 401 to move up and down through thread fit, achieving the lifting adjustment.

The lead screw 403 may be bias arranged at one side of the post 3. The bias arranged lead screw 403 is more conducive to keeping the battery swapping robot stable when the battery gripper 8 is under load. Further, the lead screw 403 is arranged at the side where the telescopic device 7 needs to provide a maximum moment. For example, if the distance between the battery 9 in the battery compartment 100 and the post 3 is less than the distance between the battery 9 on the carriageway 200 and the post 3, it indicates that the telescopic device 7 needs to extend a longer arm to pick or place the battery 9 on the carriageway 200. Because the telescopic device 7 needs to provide a greater moment to pick or place the battery 9 on the carriageway 200 under the same load, the lead screw 403 can be arranged between the post 3 and the carriageway 200. Conversely, if the distance between the battery 9 in the battery compartment 100 and the post 3 is greater than the distance between the battery 9 on the carriageway 200 and the post 3, the lead screw 403 can also be arranged between the post 3 and the battery compartment 100.

The driving part includes a first motor 407 arranged on the base 1. The first motor 407 is connected with a first direction-changing gearbox 406, the first direction-changing gearbox 406 is rotatably connected with a first transmission shaft 404, and the first transmission shaft 404 is connected with a second direction-changing gearbox 405 connected to the lead screw 403. The first motor 407 transmits the power of the first motor 407 to the second direction-changing gearbox 405 by means of the first direction-changing gearbox 406 through two first transmission shafts 404, and then transmits the power to the lead screw 403 by means of the second direction-changing gearbox 405, to drive the lead screw 403 to rotate in a vertical direction, so that the connecting part 401 threadedly engaged with the lead screw 403 spirals up relative to the lead screw 403. The first transmission shaft 404 is provided with a protective shield 410 in a covering manner to protect the first transmission shaft 404 from damage.

A lead screw nut 402 threadedly engaged with the lead screw 403 is vertically arranged on the connecting part 401. The lead screw nut 402 is in the shape of a hollow tube and is at least internally provided with internal threads partially, and the lead screw 403 is provided with external threads engaged with the internal threads. The lead screw 403 can rotate in place, and the lead screw nut 402 can drive the connecting part 401 and the lifting support arm 5 to move vertically.

A reinforcing crossbeam 409 is connected between the two lifting support arms 5. In order to ensure that the battery 9 smoothly passes through the gap 15 between the lifting support arms 5, the reinforcing crossbeam 409 is arranged at the lower end of the lifting support arm 5, and the distance between the mounting frame 6 and the reinforcing crossbeam 409 is required to be greater than the maximum height of the battery 9.

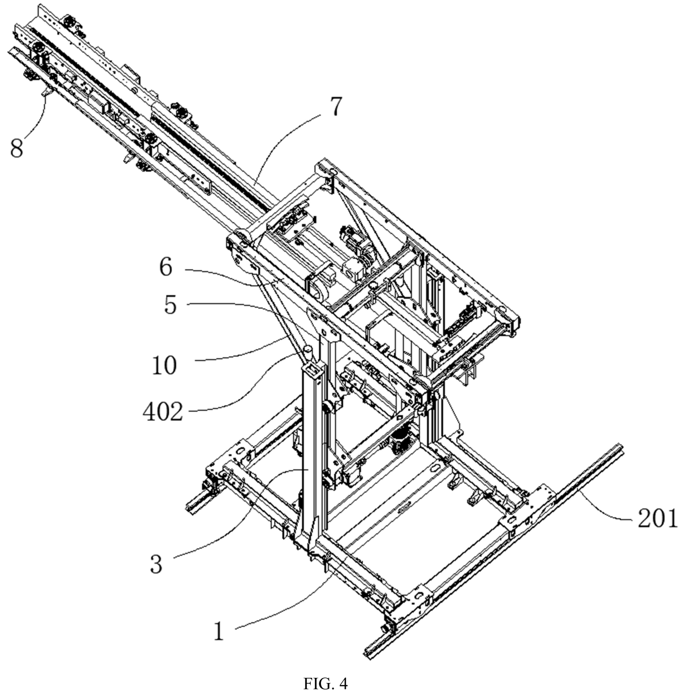

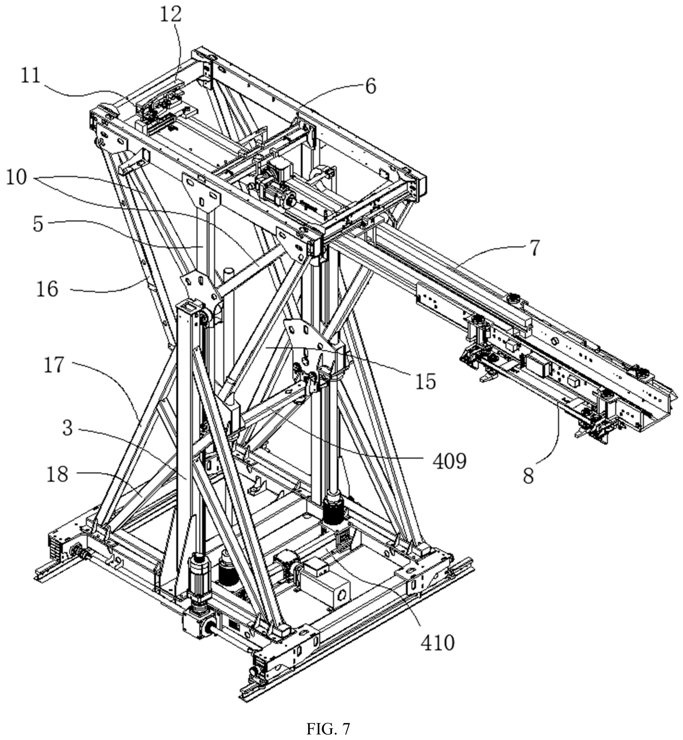

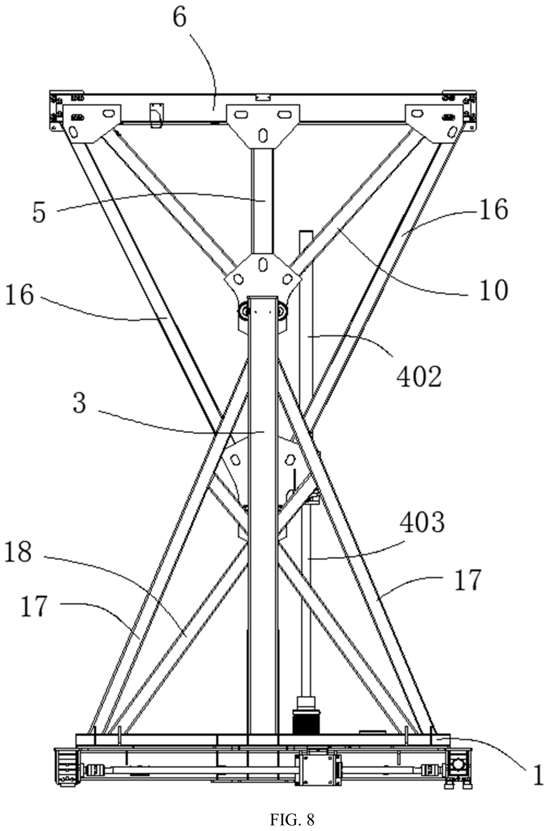

As shown in FIGS. 7 and 8, the post 3 is provided with a first reinforcing arm 17 fixedly connected to the base 1. The first reinforcing arm 17 providing triangular stable support for the post 3, and the post 3 is provided with a first reinforcing arm 17 at each side. An inclined support member 10 is mounted on the mounting frame 6 and connected to the lifting support arm 5, with the inclined support member 10 providing triangular stable support for the mounting frame 6, and the lifting support arm 5 is provided with an inclined support member 10 at each side. As shown in FIG. 4, the inclined support member 10 is also fixedly connected to the lead screw nut 402, to increase the stability of the lead screw nut 402. In order to obtain a more stable support effect and increase the load-bearing capacity of the lifting device, a second reinforcing arm 16 is added to the outer side of the inclined support member 10, and both ends of the second reinforcing arm 16 are connected to the mounting frame 6 and the lifting support arm 5, respectively, thus forming a triangular support structure. A third reinforcing arm 18 is added to the inner side of the first reinforcing arm 17, and both ends of the third reinforcing arm 18 are connected to the post 3 and the base 1, respectively, thus forming a triangular support structure.

The lifting support arm 5, the inclined support member 10, and the second reinforcing arm 16 are located in the same vertical plane. The post 3, the first reinforcing arm 17, and the third reinforcing arm 18 are located in the same vertical plane. The battery 9 passes between the vertical planes where the two lifting support arms 5 are located.

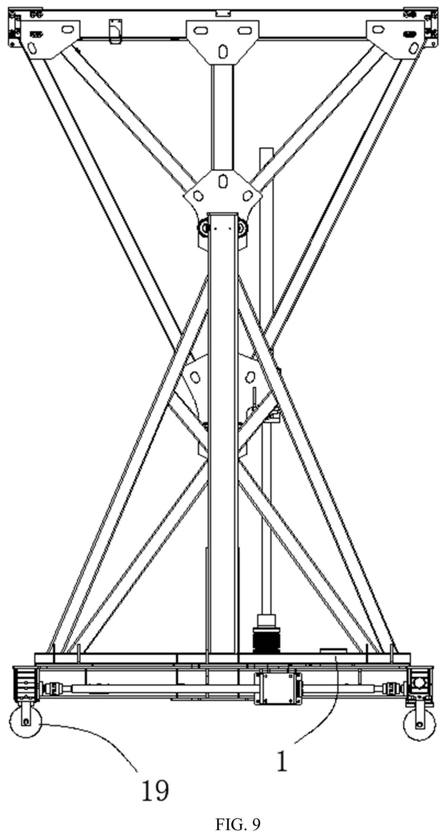

The base 1 is provided with a travelling device 2. The travelling device 2 can move the entire battery swapping robot, so as to adjust the position for picking up the battery 9 to be aligned with the mounting position in the vehicle. As shown in FIG. 2, the travelling device 2 includes travelling rollers rotatably arranged on the base 1. The travelling roller is connected with a second transmission shaft 204, the second transmission shaft 204 is connected with a third direction-changing gearbox 203, and the third direction-changing gearbox 203 is connected with a second motor 202. The second motor 202 transmits the power to the second transmission shaft 204 by means of the third direction-changing gearbox 203, and the second transmission shaft 204 drives the travelling rollers to rotate, thus achieving the movement of the battery swapping robot. Rails 201 engaged with the travelling rollers are fixedly arranged below the travelling device 2, and the rails 201 are arranged in parallel between the battery compartment 100 and the carriageway 200, so that the battery swapping robot can move stably along a predetermined path. As shown in FIG. 9, the travelling device 2 can also be set as a universal wheel 19, to facilitate moving the battery swapping robot.

The travelling device 2 may adopt a plurality of second motors 202 to directly drive the travelling rollers to rotate, so that the third direction-changing gearbox 203, the second transmission shaft 204, and other structures may be omitted. The power enabling the travelling device 2 to move horizontally and the lifting device to lift vertically is not limited to being provided by motors. Because the displacement requirement of the travelling device 2 is limited, that is, the length of the rail 201 is limited, in other embodiments, a hydraulic cylinder or even a pneumatic cylinder may be taken as a power source.

Each of the first direction-changing gearbox 406, the second direction-changing gearbox 405, and the third direction-changing gearbox 203 is provided with direction-changing gears (not shown). For example, two bevel gears are engaged with each other to achieve direction change.

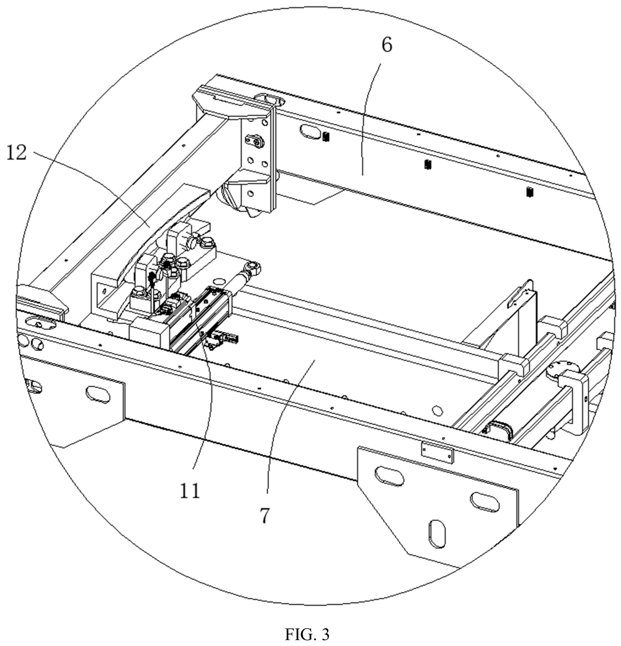

As shown in FIGS. 1 and 3, the telescopic device 7 is rotatably connected to the mounting frame 6, and a driving device 11 for driving the telescopic device 7 to swing is mounted on the mounting frame 6. The telescopic device 7 may swing within a small range under the drive of the driving device 11, so as to adjust the angle of the battery gripper 8 on the telescopic device 7, facilitating the alignment between the battery gripper 8 and the battery 9. This function also allows a driver of a battery-swapping heavy-duty truck not to park the battery-swapping heavy-duty truck completely parallel to the action direction of the battery swapping robot. That is to say, the battery swapping robot greatly reduces the requirement for parking to the driver and provides a better use experience.

An arc-shaped slide rail 12 is mounted on the mounting frame 6, and the telescopic device 7 is provided with a roller (not numbered in the figure) engaged with the arc-shaped slide rail 12. The arc-shaped slide rail 12 is set to open in the horizontal direction, and the roller rolls in the arc-shaped slide rail 12. The arc-shaped slide rail 12 can limit the rotation amplitude of the telescopic device 7 and prevent the telescopic device 7 from disengaging from the mounting frame 6, ensuring the swing stability of the telescopic device 7 while reducing the load at the rotation position of the telescopic device 7.

The telescopic device 7 includes a fixed arm and a moving arm. The fixed arm is mounted on the mounting frame 6, the moving arm is slidably mounted on the fixed arm, and the battery gripper 8 is arranged on the moving arm. The moving arm has a first position located at one side of the post 3 and a second position located at the other side of the post 3. The first position is directly above the battery 9 on the battery-swapping heavy-duty truck, and the second position is above the empty position where the battery 9 is stored in the battery compartment 100. The first position and the second position can be set in a staggered manner.

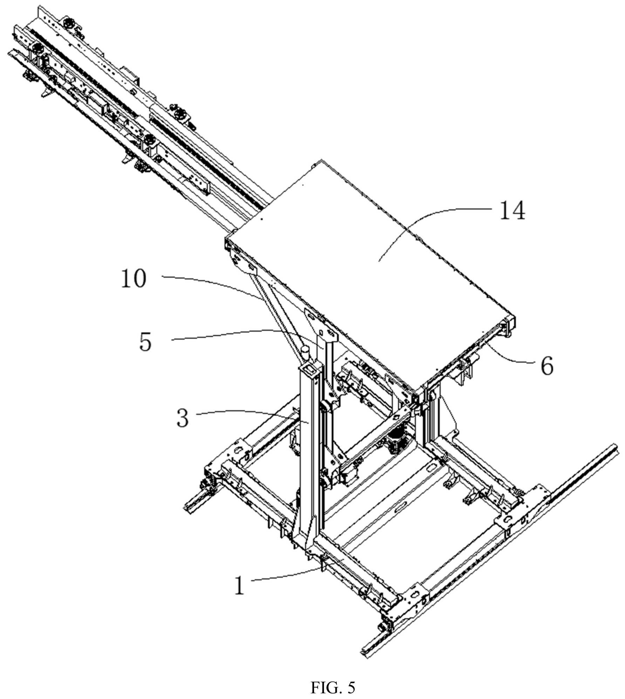

As shown in FIG. 5, a shielding cover 14 is mounted on the mounting frame 6. The shielding cover 14 is fixed to the upper end of the mounting frame 6 by means of bolts, rivets, or snap connections, providing dust and rain protection for the components and parts located below the shielding cover 14.

### Implementation of the Present Disclosure

The battery 9 in the battery compartment 100 may be placed at a certain height. That is to say, the battery compartment 100 is set higher than the carriageway 200. In order to achieve this function, the battery 9 may be arranged on a counter or a step in the battery compartment 100. In this way, the running track of the battery may be shortened, the battery swapping time may be reduced, and the battery swapping efficiency may be improved. Compared with the prior art, the battery swapping robot of the present disclosure has the advantage that the overall height is reduced. In other words, the stroke of the battery gripper 8 of the battery swapping robot may be higher than that of the post 3, the lifting of the battery gripper 8 avoids lifting the traditional battery gripper and the battery 9 using a winch sling, and the battery swapping method is safer and more reliable.

### Industrial Applicability

Because battery swapping robot adopts the posts 3 on both sides, the mode in which the battery 9 passes between the lifting support arms 5 is adopted for battery swapping, and the vertical stroke of the battery 9 is not affected by the height of the post 3, so the battery swapping robot has a more reliable and flexible battery swapping function.

The above are merely preferred embodiments of the present disclosure and are not intended to limit the present disclosure. It will be apparent to those of ordinary skill in the art that there may be various changes and variations in the present disclosure. Any modification, equivalent replacement, improvement, etc., made within the spirit and principle of the present disclosure shall be included in the protection scope of the present disclosure.

## Claims

1. A lifting device, comprising a base (1), wherein the base (1) is provided with at least two vertical posts (3), a guide rail (13) is vertically arranged on each post (3), and a lifting support arm (5) is movably arranged on the guide rail (13) and is connected to a lifting driving mechanism (4).

2. The lifting device according to claim 1, wherein the lifting driving mechanism (4) comprises a connecting part (401) movably arranged on the guide rail (13), a guide wheel (408) engaged with the guide rail (13) is rotatably arranged on the connecting part (401), the connecting part (401) is threadedly engaged with a vertical lead screw (403), and the lead screw (403) is connected with a driving part for driving the lead screw (403) to rotate.

3. The lifting device according to claim 2, wherein a lead screw nut (402) threadedly engaged with the lead screw (403) is vertically arranged on the connecting part (401).

4. The lifting device according to claim 1, wherein a reinforcing crossbeam (409) is connected between the two lifting support arms (5).

5. The lifting device according to claim 1, wherein the post (3) is provided with a first reinforcing arm (17) fixedly connected to the base (1).

6. The lifting device according to claim 1, wherein the base (1) is provided with a travelling device (2).

7. A battery swapping robot, comprising the lifting device according to any one of claims 1 to 6 for lifting, the battery swapping robot further comprising a mounting frame (6) fixedly mounted on the lifting support arm (5), wherein a telescopic device (7) is connected below the mounting frame (6), and a battery gripper (8) for clamping a battery (9) is mounted on the telescopic device (7).

8. The battery swapping robot according to claim 7, wherein the telescopic device (7) is rotatably connected to the mounting frame (6), and a driving device (11) for driving the telescopic device (7) to swing is mounted on the mounting frame (6).

9. The battery swapping robot according to claim 8, wherein an arc-shaped slide rail (12) is mounted on the mounting frame (6), and the telescopic device (7) is provided with a roller engaged with the arc-shaped slide rail (12).

10. The battery swapping robot according to claim 7, wherein an inclined support member (10) is mounted on the mounting frame (6) and connected to the lifting support arm (5).
